(19)

Europäisches
Patentamt
European
Patent Office
Office européen
des brevets

(11) **EP 4 661 141 A1**

(12) **EUROPEAN PATENT APPLICATION**
published in accordance with Art. 153(4) EPC

(43) Date of publication:
**10.12.2025 Bulletin 2025/50**

(21) Application number: **24749952.8**

(22) Date of filing: **17.01.2024**

(51) International Patent Classification (IPC):
*H01M 10/058* (2010.01)  *H01M 4/134* (2010.01)
*H01M 10/052* (2010.01)  *H01M 10/054* (2010.01)
*H01M 50/463* (2021.01)  *H01M 50/474* (2021.01)
*H01M 50/477* (2021.01)  *H01M 50/483* (2021.01)
*H01M 50/486* (2021.01)

(52) Cooperative Patent Classification (CPC):
**H01M 4/134; H01M 10/052; H01M 10/054;
H01M 10/058; H01M 50/463; H01M 50/474;
H01M 50/477; H01M 50/483; H01M 50/486;
Y02E 60/10**

(86) International application number:
**PCT/JP2024/001088**

(87) International publication number:
**WO 2024/161998 (08.08.2024 Gazette 2024/32)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **31.01.2023 JP 2023013011**

(71) Applicant: **Panasonic Intellectual Property
Management Co., Ltd.
Kadoma-shi, Osaka 571-0057 (JP)**

(72) Inventors:
• **SAKATA, Hiroki**
 **Kadoma-shi, Osaka 571-0057 (JP)**
• **URATA, Sho**
 **Kadoma-shi, Osaka 571-0057 (JP)**
• **MORIYAMA, Toshitaka**
 **Kadoma-shi, Osaka 571-0057 (JP)**

(74) Representative: **Eisenführ Speiser
Patentanwälte Rechtsanwälte PartGmbB
Postfach 10 60 78
28060 Bremen (DE)**

(54) **NONAQUEOUS ELECTROLYTE SECONDARY BATTERY AND SEPARATOR FOR
NONAQUEOUS ELECTROLYTE SECONDARY BATTERIES**

(57)    A disclosed nonaqueous electrolyte secondary battery includes a positive electrode (11), a negative electrode (12), a separator (50) provided between the positive electrode (11) and the negative electrode (12), and a spacer (53) provided in at least one region selected from the group consisting of a region between the positive electrode (11) and the separator (50) and a region between the negative electrode (12) and the separator (50). The negative electrode (12) is a negative electrode in which a metal used as a negative electrode active material deposits during charging and the metal dissolves during discharging. The spacer (53) contains a resin and a filler. The resin contains a cellulose-based compound.

FIG. 2

**Description**

[Technical Field]

The present disclosure relates to a nonaqueous electrolyte secondary battery and a separator for a nonaqueous electrolyte secondary battery.

[Background Art]

A lithium secondary battery (lithium metal secondary battery) is known as one type of nonaqueous electrolyte secondary battery. In the lithium secondary battery, a lithium metal deposits on the negative electrode during charging, and the lithium metal dissolves into the nonaqueous electrolyte during discharging. Various proposals have been conventionally made for lithium secondary batteries.

Patent Literature 1 (WO 2020/066254) discloses, in claim 1, "a lithium secondary battery including: a positive electrode including a positive electrode current collector and a positive electrode material mixture layer that contains a positive electrode active material; a negative electrode including a negative electrode current collector that faces the positive electrode; a separator provided between the positive electrode and the negative electrode; and a lithium ion conductive nonaqueous electrolyte, wherein the positive electrode active material contains a composite oxide that contains lithium and a metal M other than lithium, the metal M contains at least a transition metal, a lithium metal deposits on the negative electrode during charging, and the lithium metal dissolves from the negative electrode during discharging, the positive electrode current collector has a first length in a first direction D1 that is shorter than a second length in a second direction D2 that intersects the first direction, a spacer is provided between the positive electrode and the separator so as to form a space for storing the lithium metal between the positive electrode and negative electrode, and a straight line SL that passes through three or more points of the spacer can be drawn along the first direction D1".

Patent Literature 2 (Japanese Patent No. 7017869) discloses, in claim 1, "a wound body as a separator, wherein the separator includes a thermoplastic polymer coating layer applied onto at least one side of a substrate, a side surface of the wound body in a region 1 cm or less apart from the innermost layer of the wound separator has a piercing strength of 10 N or more and 100 N or less, the substrate is a polyolefin porous substrate that contains a polyolefin resin as a main component, the thermoplastic polymer coating layer contains (i) at least one thermoplastic polymer that has a glass transition point (Tg) or a melting point (Tm) of 20°C or more and 100°C or less and/or (ii) at least two thermoplastic polymers, the thermoplastic polymer coating layer has at least two glass transition temperatures as a whole, with at least one of the two glass transition temperatures being present in a region at a temperature less than 40°C and at least one of the two glass transition temperatures being present in a regions at a temperature of 40°C or more, the thermoplastic polymer contains at least one selected from the group consisting of a fluorine-containing resin, a copolymer that contains a fluorine-containing resin, a diene-based polymer, a copolymer that contains a diene-based polymer, a hydride of a diene-based polymer, an acrylic polymer, a copolymer that contains an acrylic polymer, and a hydride of an acrylic polymer".

[Citation List]

[Patent Literature]

PTL 1: WO 2020/066254

PTL 2: Japanese Patent No. 7017869

[Summary of Invention]

[Technical Problem]

Currently, further improvement for the characteristics of nonaqueous electrolyte secondary batteries is required. It is an object of the present disclosure to provide a nonaqueous electrolyte secondary battery that has high levels of initial characteristics and cycle characteristics.

[Solution to Problem]

One aspect of the present disclosure relates to a nonaqueous electrolyte secondary battery. The nonaqueous electrolyte secondary battery is a nonaqueous electrolyte secondary battery including: a positive electrode; a negative electrode; a separator provided between the positive electrode and the negative electrode; a nonaqueous electrolyte; and a spacer provided in at least one region selected from the group consisting of a region between the positive electrode and the separator and a region between the negative electrode and the separator, wherein the negative electrode is a negative electrode in which a metal used as a negative electrode active material deposits during charging, and the metal dissolves during discharging, the spacer contains a resin and a filler, and the resin contains a cellulose-based compound.

Another aspect of the present disclosure relates to a separator. The separator is a separator for a nonaqueous electrolyte secondary battery including: a substrate; and a spacer formed on the substrate, wherein the spacer contains a resin and a filler, and the resin contains a cellulose-based compound.

[Advantageous Effects of Invention]

According to the present disclosure, it is possible to obtain a nonaqueous electrolyte secondary battery that has high levels of initial characteristics and cycle characteristics, and a separator that can be used in the nonaqueous electrolyte secondary battery.

Novel features of the present invention are set forth in the appended claims. However, the present invention will be well understood from the following detailed description of the present invention with reference to the drawings, in terms of both the configuration and the content together with other objects and features of the present invention.

[Brief Description of Drawings]

FIG. 1 is a vertical cross-sectional view schematically showing one example of a nonaqueous electrolyte secondary battery according to an embodiment of the present disclosure.
FIG. 2 is a cross-sectional view schematically showing a portion of the lithium secondary battery shown in FIG. 1.
FIG. 3 is a top view showing one example of a spacer pattern.
FIG. 4 is a top view showing another example of a spacer pattern.
FIG. 5 is a top view showing another example of a spacer pattern.

[Description of Embodiments]

Hereinafter, an embodiment of the present disclosure will be described by way of examples. However, the embodiment of the present disclosure is not limited to the examples described below. In the following description, specific numerical values and materials may be listed as examples. However, other numerical values and materials may also be used as long as the advantageous effects of the invention of the present disclosure can be obtained. In the specification of the present application, the expression "a range of a numerical value A to a numerical value B" encompasses the range including the numerical value A and the numerical value B, and can also be interpreted as "a numerical value A or more and a numerical value B or less". In the following description, when lower and upper limits of numerical values of specific physical properties, conditions, and the like are shown as examples, any of the lower limits and any of the upper limits can be combined in any way as long as the lower limits are not greater than or equal to the upper limits.

(Nonaqueous Electrolyte Secondary Battery)

Hereinafter, a nonaqueous electrolyte secondary battery according to the present embodiment may also be referred to as "nonaqueous electrolyte secondary battery (B)" or "secondary battery (B)". The secondary battery (B) includes a positive electrode, a negative electrode, a separator provided between the positive electrode and the negative electrode, a nonaqueous electrolyte, and a spacer provided in at least one region selected from the group consisting of a region between the positive electrode and the separator and a region between the negative electrode and the separator. The negative electrode is a negative electrode in which a metal used as a negative electrode active material deposits during charging, and the metal dissolves during discharging. The spacer contains a resin and a filler. The resin contains a cellulose-based compound.

Conventionally, when a negative electrode in which a metal (negative electrode active material) deposits during charging is used, a spacer is used to ensure a space for the metal to deposit. In the secondary battery (B), the spacer ensures a space between the positive electrode and the negative electrode. For this reason, it is possible to suppress expansion of the electrode group when the battery is repeatedly charged and discharged. As a result, it is possible to suppress deterioration of cycle characteristics or the like. The cycle characteristics tend to deteriorate when the electrode group expands because an internal short circuit is likely to occur due to the deposited metal (negative electrode active material).

Currently, further improvement for the characteristics of nonaqueous electrolyte secondary batteries is required. The inventors of the present application newly found, as a result of studies, that, by using the spacer configured as described above, it is possible to obtain a nonaqueous electrolyte secondary battery that has both high levels of initial characteristics and cycle characteristics. The present disclosure is based on this new finding.

The metal (negative electrode active material) that deposits during charging may be at least one elected from the group consisting of lithium and sodium. The metal that deposits during charging may contain lithium. The metal that deposits during charging may be a lithium metal. The lithium metal may contain a trace amount of other metal elements.

A lithium secondary battery in which a lithium metal deposits on the negative electrode during charging is also called a lithium metal secondary battery. In the negative electrode of the lithium secondary battery, the lithium metal deposits during charging and the lithium metal dissolves during discharging. The negative electrode includes at least a negative electrode current collector, and the lithium metal deposits on the negative electrode current collector. Hereinafter, a lithium secondary battery that is used as the secondary battery (B) may also be referred to as "lithium secondary battery (LB)".

In the lithium secondary battery (LB), for example, 70% or more of the rated capacity is exhibited by deposition and dissolution of the lithium metal. Migration of electrons in the negative electrode during charging and during discharging is mainly caused by deposition and dissolution of the lithium metal in the negative electrode. Specifically, 70 to 100% (for example, 80 to 100% or 90 to 100%) of migration of electrons (electric current from another perspective) in the negative electrode during charging and during discharging is caused by deposition and dissolution of the lithium metal.

The cellulose-based compound content Cc in the resin contained in the spacer may be 50 volume% or more, 70 volume% or more, or 90 volume% or more, and may be 100 volume% or less, 80 volume% or less, or 60 volume% or less. By setting the cellulose-based compound content Cc to 50 volume% or more, it is possible to obtain the secondary battery (B) that has both particularly high levels of initial characteristics and cycle characteristics. The cellulose-based compound content Cc may be 100 volume%. That is, the resin contained in the spacer may be constituted of the cellulose-based compound alone.

The cellulose-based compound is at least one selected from the group consisting of a cellulose and a cellulose derivative. The cellulose-based compound contained in the spacer may be a cellulose, a cellulose derivative, or a mixture of a cellulose and a cellulose derivative.

The cellulose derivative is a polymer that has a cellulose backbone. Examples of the cellulose derivative include a cellulose a portion of which is substituted with another substituent. Examples of the cellulose derivative include an alkyl cellulose, a carboxymethyl cellulose, a nitrocellulose, an acetyl cellulose, and the like. Examples of the alkyl cellulose include methyl cellulose and ethyl cellulose.

The cellulose-based compound may contain or be at least one selected from the group consisting of methyl cellulose, ethyl cellulose, and carboxymethyl cellulose.

The resin contained in the spacer may contain a resin other than the cellulose-based compound. Examples of the resin other than the cellulose-based compound include a fluorine-containing resin, an acrylic resin, a urethane-based resin, a polyimide-based resin, a conjugated diene-based polymer, a polyvinyl alcohol-based resin, and a polyvinylpyrrolidone-based resin.

The resin content Cr in the spacer may be 30 volume% or more, 40 volume% or more, or 50 volume% or more, and may be 90 volume% or less, 80 volume% or less, or 60 volume% or less. By setting the resin content Cr to 30 volume% or more, it is possible to suppress formation of voids in a spacer layer. Accordingly, it is possible to suppress deposition of lithium in the voids formed in the spacer layer during charging, and thus the capacity retention rate can be enhanced.

The filler content Cf in the spacer may be 10 volume% or more, 20 volume% or more, or 40 volume% or more, and may be 70 volume% or less, 60 volume% or less, or 50 volume% or less.

There is no particular limitation on the filler contained in the spacer. As the filler, an insulating filler, an inorganic filler (inorganic particles), an organic filler (organic particles), or a mixture thereof may be used. Examples of the material for the filler include an oxide, a nitride, and a carbide. Examples of the oxide include aluminum oxide (alumina), magnesium oxide, titanium oxide, zirconium oxide, and silicon oxide. Examples of the nitride include silicon nitride, and aluminum nitride titanium nitride. Examples of the carbide include silicon carbide.

The filler (particles) may have a spherical shape or any other shape. There is no particular limitation on the average particle size of the filler. The filler may have an average particle size of 0.1 $\mu$m or more, 0.3 $\mu$m or more, 0.4 $\mu$m or more, or 0.5 $\mu$m or more, and may have an average particle size of 10 $\mu$m or less, 5 $\mu$m or less, or 4 $\mu$m or less. Also, the filler may contain two or more types of fillers that have different average particle sizes. The average particle size can be measured using the method described below. First, an image of a cross section of the spacer is obtained by capturing the cross section of the spacer using an electron microscope. Next, the obtained image is subjected to image processing such as binarization to specify particle portions. Next, the diameter (equivalent circle diameter) of a circle that has the same area as the cross-sectional area of each particle portion is determined, and the arithmetic average of the determined equivalent circle diameters is defined as the average particle size. The arithmetic average can be determined from, for example, twenty particles. The average particle size of other particles contained in the electrode plates and the separator can also be determined in the same manner.

The resin contained in the spacer may have a glass transition point Tg of 100°C or more, 120°C or more, or 130°C or more. The upper limit of the glass transition point Tg may be, but is not particularly limited to, 300°C or less. By setting the glass transition point Tg to 100°C or more, degradation of the spacer is suppressed, and thus the cycle characteristics can be enhanced.

The resin contained in the spacer may have a compression strength of 90 $N/mm^2$ or more, 140 $N/mm^2$ or more, or 190 $N/mm^2$ or more. The upper limit of the compression strength may be, but is not particularly limited to, 900 $N/mm^2$ or less. By setting the compression strength to 90 $N/mm^2$ or more, compression of the spacer is suppressed, and thus the cycle characteristics can be enhanced. The compression strength can be measured in accordance with JIS (Japanese industrial standards) K7181. Specifically, the compression strength can be measured by applying a load on a test piece with a short side length of 4 mm, a long side length of 10 mm, and a height of 10 mm sandwiched by two parallel plate surfaces.

The spacer may be formed on at least one member selected from the group consisting of the positive electrode, the negative electrode, and the separator. The spacer may be formed on the positive electrode, the negative electrode, or the separator. From the viewpoint of adhesion and the like, the spacer is preferably formed on the separator.

The spacer may be formed on only one side or both sides of the at least one member depending on the configuration of the secondary battery (B). When the spacer is formed on the positive electrode, the spacer may be formed at least on one of two main surfaces of the positive electrode that faces the negative electrode. When the spacer is formed on the negative electrode, the spacer may be formed at least on one of two main surfaces of the negative electrode that faces the positive electrode. When the spacer is formed on the separator, the spacer may be formed on a positive electrode-side main surface of the separator or a negative electrode-side main surface of the separator.

There is no particular limitation on the spacer as long as the spacer can form a space in at least one region selected from the group consisting of a region between the positive electrode and the separator and a region between the negative electrode and the separator. The spacer may include or be at least one selected from the group consisting of linear protrusions and dot-shaped protrusions.

The spacer may include linear protrusions arranged in a mesh pattern. The mesh pattern may be a combined pattern of polygons (a triangle, a square, and a hexagon, and the like). For example, the mesh pattern may be a honeycomb pattern. The spacer may include a plurality of linear protrusions arranged in a stripe pattern. The spacer may include a plurality of dot-shaped protrusions arranged regularly at constant intervals.

There is no particular limitation on a cross-sectional shape of the linear protrusions (a cross section of the linear protrusions taken perpendicular to a direction in which the linear protrusions extend). The cross-sectional shape of the linear protrusions may be rectangular, trapezoidal, or semicircular.

In the member on which the spacer is formed, the ratio Rs of the area of the spacer relative to the area of the surface on which the spacer is formed may be 30% or less, 20% or less, 10% or less, or 5% or less. The ratio Rs may be 1% or more, 3% or more, or 5% or more. When the spacer is formed on one side of the separator, the ratio of the area of the spacer relative to the area of the one side of the separator may be within the same range as that of the ratio Rs described above. For example, when the spacer is formed on one side of the separator, the ratio of the area of the spacer relative to the area of the one side of the separator may be 30% or less.

The spacer may have an average height Hs of 10 $\mu$m or more, or 20 $\mu$m or more, and 100 $\mu$m or less, 50 $\mu$m or less, 40 $\mu$m or less, or 30 $\mu$m or less. The spacer height may be substantially constant so as to make a spacing between the electrode plates formed by the spacer substantially constant.

The average height Hs of the spacer can be measured using the method described below. First, an image of a cross section of the member (for example, the separator) on which the spacer is formed taken along the thickness direction of the member is obtained by capturing the cross section of the member using an electron microscope. At this time, a plurality of images may be obtained as needed. Next, in the obtained image, five points are arbitrarily selected in the spacer, and the spacer height is measured at each of the selected points. Next, an arithmetic average of the spacer heights measured at the five points is calculated, and defined as the average height Hs.

The spacer may have a non-porous structure that does not allow ions (for example, lithium ions) of the metal that is used as the negative electrode active material to pass therethrough. Such a spacer can be achieved by forming the spacer under a condition that does not make the spacer porous. There is no particular limitation on the method for forming the non-porous structure spacer, and a known method may be used. For example, the non-porous structure spacer may be formed by printing, on the separator, an ink that contains the material for the spacer. The expression "not allow lithium ions to pass through" used in the specification of the present application means that an amount of lithium ions that does not affect the battery characteristics and the battery shape does not pass through the spacer, and thus encompasses the case where an amount of lithium ions that can be deemed as not substantially pass through the spacer migrates in the spacer.

There is no particular limitation on the method for producing the secondary battery (B), except that the above-described separator is used. The secondary battery (B) may be produced using the same production method as a known production method. The secondary battery (B) can be produced by housing an electrode group that includes the positive electrode, the negative electrode, and the separator and a nonaqueous electrolyte in an outer casing.

(Separator)

Hereinafter, the separator according to the present embodiment may also be referred to as "separator (S)". The separator (S) is a separator for a nonaqueous electrolyte secondary battery. The separator (S) includes a substrate and a spacer formed on the substrate. The spacer contains a resin and a filler. The resin contains a cellulose-based compound.

As the spacer formed on the separator (S), the spacer that was described in the description of the secondary battery (B) can be used. The matters described in the description of the spacer of the secondary battery (B) can be applied to the separator (S), and thus a redundant description may be omitted. The matters that will be described in the description of the separator (S) may be applied to the secondary battery (B). That is, the separator (S) may be used as the separator (substrate) and the spacer of the secondary battery (B).

The cellulose-based compound content in the resin contained in the spacer may be 50 volume% or more. The resin contained in the spacer may be a cellulose-based compound. The cellulose-based compound may contain or be at least one selected from the group consisting of methyl cellulose, ethyl cellulose, and carboxymethyl cellulose. The resin content in the spacer may be 30 volume% or more.

(Substrate of Separator)

As a substrate of the separator, a sheet that can be used as a separator for a nonaqueous electrolyte secondary battery is used. The substrate may be constituted of a substrate layer alone. Alternatively, the substrate may include a substrate layer and a composite material layer formed on the substrate layer. The composite material layer contains a polymer and inorganic particles. When the substrate includes a substrate layer and a composite material layer, the separator may be provided such that the composite material layer faces the positive electrode, or the composite material layer faces the negative electrode. When the substrate includes a substrate layer and a composite material layer, the spacer may be formed on the substrate layer or the composite material layer. By forming the spacer on the composite material layer, the effect of suppressing thermal contraction of the substrate layer can be particularly enhanced.

The substrate layer contracts when the temperature of the electrode group that includes the positive electrode, the negative electrode, and the separator increases excessively. Due to the contraction of the substrate layer, a short circuit is likely to occur between the positive electrode and the negative electrode, which is likely to cause the temperature of the electrode group to increase even more. By stacking the composite material layer on the substrate layer, the contraction of the substrate layer when the temperature of the electrode group increases can be suppressed. As a result, a further increase in the temperature of the electrode group can be suppressed.

As the substrate layer, an ion-permeable and insulating porous sheet is used. Examples of the porous sheet include a porous film, a woven fabric, and a non-woven fabric. There is no particular limitation on the material for the substrate layer, but a polymer material may be used. Examples of the polymer material include a polyolefin resin, a polyamide resin, and a cellulose. Examples of the polyolefin resin include polyethylene, polypropylene, a copolymer of ethylene and propylene. The substrate layer may contain an additive, where appropriate. As the additive, an inorganic filler or the like may be used. As the substrate layer, a sheet used as a separator for a nonaqueous electrolyte secondary battery (for example, a lithium secondary battery) may also be used.

The composite material layer contains a polymer (hereinafter also referred to as "polymer (PL)") and inorganic particles. The inorganic particles may include first particles and/or second particles. The first particles are lithium-containing phosphate particles. The second particles are particles other than the first particles. The composite material layer is a layer that allows lithium ions to pass therethrough.

The phosphate that constitutes the first particles may be at least one selected from the group consisting of lithium phosphate ($Li_3PO_4$), dilithium hydrogen phosphate ($Li_2HPO_4$), and lithium dihydrogen phosphate ($LiH_2PO_4$). Out of these, it is preferable to use lithium phosphate because the effect of suppressing heat generation in the battery in the event of an abnormality occurring in the battery is high.

One preferred example of the second particles (inorganic particles) is particles made of an insulating inorganic compound that does not melt or decompose in the event of overheating of the battery. As the second particles, inorganic particles ordinarily used as an inorganic filler may be used. Examples of the material for the second particles include aluminum oxide, boehmite, talc, titanium oxide, magnesium oxide, and silicon oxide.

As the polymer (PL), it is preferable to use a polymer that has a higher level of heat resistance than the main component of the substrate layer of the separator. The polymer (PL) may contain or be at least one selected from the group consisting of an aromatic polyamide, an aromatic polyimide, and an aromatic polyamide imide. These are known as high heat resistant polymers. From the viewpoint of heat resistance, it is preferable to use an aramid (a wholly aromatic polyamide).

The inorganic particles may include first particles and second particles other than phosphate particles as described above. In this case, the composite material layer may include a first layer that contains the first particles and a second layer that contains the second particles. With this configuration, the effect of suppressing an excessive increase in the temperature of the electrode group can be particularly enhanced. The composite material layer may be constituted of the first layer alone or the second layer alone.

The first layer and the second layer may be stacked on one of two main surfaces of the substrate layer that is on the positive electrode side or the negative electrode side, or a different main surface. For example, the separator and the spacer may have any of the following stacked structures: a stacked structure in which the substrate layer, the first layer, the second layer, and the spacer are stacked in this order; a stacked structure in which the substrate layer, the second layer, the first layer, and the spacer are stacked in this order; a stacked structure in which the first layer, the second layer, the substrate layer, and the spacer are stacked in this order; and a stacked structure in which the second layer, the first layer, the substrate layer, and the spacer are stacked in this order. Alternatively, the first layer and the second layer may be provided on different main surfaces of the substrate layer. For example, the separator and the spacer may have a stacked structure in which the first layer, the substrate layer, the second layer, and the spacer are stacked in this order, or a stacked structure in which the second layer, the substrate layer, the first layer, and the spacer are stacked in this order.

There is no particular limitation on the thickness of the substrate. The thickness of the substrate may be 5 $\mu$m or more, or 10 $\mu$m or more, and may be 50 $\mu$m or less, or 40 $\mu$m or less. When the substrate includes a substrate layer and a composite material layer, the substrate layer may have a thickness of 5 $\mu$m or more, or 10 $\mu$m or more, and 50 $\mu$m or less, or 40 $\mu$m or less.

(Method for Forming Spacer)

There is no particular limitation on the method for forming the spacer, and the spacer can be formed using the method described below. First, a coating liquid is prepared by mixing the component of the spacer with a liquid medium (a dispersion medium). Next, the coating liquid is applied to a portion where the spacer is to be formed, and then dried. In this way, the spacer can be formed. There is no particular limitation on the liquid medium used to prepare the coating liquid. Examples of the liquid medium include an organic solvent (N-methyl-2-pyrrolidone or the like). The coating liquid may be applied using a dispenser or the like, or using a known printing method such as gravure printing, inkjet printing, or screen printing. Also, the drying may be performed using a known method such as drying by heat or natural drying. In the manner described above, the separator can be obtained.

When the separator includes a substrate layer and a composite material layer, the separator may be produced using the method described below. First, a substrate layer is prepared. As the substrate layer, a commercially available substrate layer may be used. Next, a composite material layer is formed on the substrate layer.

There is no particular limitation on the method for forming the composite material layer, and the composite material layer can be formed using the method described below. First, a coating liquid is prepared by mixing the component of the composite material layer with a liquid medium (a dispersion medium). Next, the coating liquid is applied to the substrate layer to form a coating film, and then the coating film is dried. In this way, the composite material layer can be formed. There is no particular limitation on the liquid medium used to form the coating liquid. Examples of the liquid medium include an organic solvent (N-methyl-2-pyrrolidone or the like).

There is no particular limitation on the steps of the method for forming the composite material layer, and a known method can be used. For example, the coating liquid may be applied using a known method such as a method that uses a bar coater. Also, the drying may be performed using a known method such as drying by heat or natural drying.

Hereinafter, examples of the constituent elements of the secondary battery (B) will be specifically described. The constituent elements described below are merely exemplary, and thus the constituent elements of the secondary battery (B) of the present embodiment are not limited to those described below. As constituent elements other than characteristic constituent elements of the secondary battery (B) of the present embodiment, known constituent elements may be used. Hereinafter, an example will be mainly described in which the secondary battery (B) is a lithium secondary battery (lithium secondary battery (LB)). When the secondary battery (B) is a battery other than the lithium secondary battery, a positive electrode and a negative electrode suitable for the battery may be used. The separator and the spacer were described above, and thus a redundant description thereof will be omitted.

There is no particular limitation on the shape of the secondary battery (B). Examples of the shape of the secondary battery (B) include a cylindrical shape, a coin shape, a prismatic shape, a sheet shape, and a flat shape.

The negative electrode is provided to face the positive electrode. The separator is provided between the positive electrode and the negative electrode. The positive electrode, the negative electrode, and the separator may be spirally wound, with the separator interposed between the positive electrode and the negative electrode. When forming a spirally wound-type electrode group, a strip-shaped positive electrode, a strip-shaped negative electrode, and a strip-shaped separator are used. Alternatively, the positive electrode, the negative electrode, and the separator may be stacked. For example, a flat positive electrode, a flat negative electrode, and a flat separator may be stacked. That is, the electrode group may be a spirally wound-type electrode group or a stacked-type electrode group.

(Negative Electrode)

The negative electrode includes a negative electrode current collector. In the lithium secondary battery (LB), a lithium metal deposits on the negative electrode current collector due to charging. More specifically, the lithium ions contained in the nonaqueous electrolyte receive electrons on the negative electrode current collector during charging, and transform into a lithium metal, and the lithium metal deposits on the negative electrode current collector. The lithium metal deposited on the negative electrode current collector dissolves into the nonaqueous electrolyte as lithium ions due to discharging. The lithium ions contained in the nonaqueous electrolyte may be either one or both of lithium ions derived from a lithium salt added to the nonaqueous electrolyte and lithium ions supplied from the positive electrode active material due to charging.

As the negative electrode current collector, a conductive sheet can be used. When the electrode group is a spirally wound-type electrode group, a strip-shaped conductive sheet is used. Examples of the conductive sheet include a conductive film, and a metal foil.

As the material for the negative electrode current collector (conductive sheet), a conductive material other than a lithium metal and a lithium alloy may be used. As the conductive material, a metal may also be used. The conductive material is preferably a material that is unreactive with lithium. The conductive material is preferably a material that does not form an alloy or an intermetallic compound with lithium. Examples of the conductive material include copper (Cu), nickel (Ni), iron (Fe), an alloy that contains any of these metal elements, and graphite whose basal planes are preferentially exposed. Examples of the alloy include a copper alloy, and stainless steel (SUS). As the conductive material, it is preferable to use copper and/or a copper alloy because they have a high level of conductivity. There is no particular limitation on the thickness of the negative electrode current collector, and the thickness of the negative electrode current collector may be in a range of 5 to 300 $\mu$m.

A negative electrode material mixture layer may be formed on a surface of the negative electrode current collector. The negative electrode material mixture layer is formed by, for example, applying a paste that contains a negative electrode active material such as graphite onto at least a portion of the surface of the negative electrode current collector. However, from the viewpoint of achieving a high capacity lithium secondary battery whose capacity is higher than that of a lithium ion battery, the thickness of the negative electrode material mixture layer is set to be sufficiently thin so that a lithium metal can deposit on the negative electrode.

The negative electrode may include a negative electrode current collector and a lithium metal or a lithium alloy in the form of a sheet provided on the negative electrode current collector. That is, a lithium metal-containing underlying layer (a layer made of a lithium metal or a lithium alloy) may be formed in advance on the negative electrode current collector. The lithium alloy may contain, in addition to lithium, an element such as aluminum, magnesium, indium, or zinc. By forming the underlying layer on the negative electrode current collector in advance to cause a lithium metal to deposit thereon during charging, deposition of dendrites can be more effectively suppressed. There is no particular limitation on the thickness of the underlying layer, and the thickness of the underlying layer may be, for example, in a range of 5 $\mu$m to 25 $\mu$m.

(Positive Electrode)

The positive electrode may include a positive electrode current collector and a positive electrode material mixture layer supported on the positive electrode current collector. The positive electrode material mixture layer contains a positive electrode active material. The positive electrode material mixture layer may contain a positive electrode active material, a conductive material, and a binder. The positive electrode material mixture layer may be formed on only one or both sides of the positive electrode current collector. The positive electrode can be formed by, for example, applying a positive electrode material mixture slurry that contains a positive electrode active material, a conductive material, and a binder onto the positive electrode current collector, and drying the coating film, and then rolling the coating film.

The positive electrode active material is a material that absorbs and desorbs lithium ions. Examples of the positive electrode active material include a lithium-containing transition metal oxide, a transition metal fluoride, a polyanion, a fluorinated polyanion, and a transition metal sulfide. Out of these, it is preferable to use a lithium-containing transition metal oxide because the production cost is low and the average discharge voltage is high.

Examples of the transition metal element contained in the lithium-containing transition metal oxide include Sc, Ti, V, Cr, Mn, Fe, Co, Ni, Cu, Y, Zr, and W. The lithium-containing transition metal oxide may contain one or two or more transition metal elements. The transition metal element may be Co, Ni and/or Mn. The lithium-containing transition metal oxide may contain one or more representative elements where necessary. Examples of the representative element include Mg, Al, Ca, Zn, Ga, Ge, Sn, Sb, Pb, and Bi. The representative element may be Al or the like.

The conductive material is, for example, a carbon material. Examples of the carbon material include carbon blacks (acetylene black, ketjen black, and the like), carbon nanotubes, and graphites.

As the binder, for example, a fluorine resin, polyacrylonitrile, a polyimide resin, an acrylic resin, a polyolefin resin, a rubbery polymer, or the like is used. As the fluorine resin, polytetrafluoroethylene, polyvinylidene fluoride, or the like is used.

As the positive electrode current collector, a conductive sheet may be used. As the conductive sheet, a foil, a film, or the like is used. A carbon material may be applied onto a surface of the positive electrode current collector.

The material for the positive electrode current collector (conductive sheet) may be, for example, a metal material that contains Al, Ti, Fe, or the like. The metal material may be Al, an Al alloy, Ti, a Ti alloy, an Fe alloy, or the like. The Fe alloy may be stainless steel (SUS). There is no particular limitation on the thickness of the positive electrode current collector, and the thickness of the positive electrode current collector may be, for example, in a range of 5 to 300 $\mu$m.

(Nonaqueous Electrolyte)

A lithium ion-conductive nonaqueous electrolyte contains, for example, a nonaqueous solvent, and a lithium ion and an anion that are dissolved in the nonaqueous solvent. The nonaqueous electrolyte may be in the form of a liquid or a gel.

The nonaqueous electrolyte in the form of a liquid is prepared by dissolving a lithium salt in the nonaqueous solvent. By the lithium salt dissolving into the nonaqueous solvent, the lithium ion and the anion are generated.

The nonaqueous electrolyte in the form of a gel contains a lithium salt and a matrix polymer, or contains a lithium salt, a nonaqueous solvent, and a matrix polymer. As the matrix polymer, for example, a polymer material that absorbs the nonaqueous solvent and turns into a gel is used. Examples of the polymer material include a fluorine resin, an acrylic resin, and a polyether resin.

As the lithium salt and the anion, a known lithium salt and anion used in a nonaqueous electrolyte for a lithium secondary battery can be used. Specific examples include $BF_4^-$, $ClO_4^-$, $PF_6^-$, $CF_3SO_3^-$, $CF_3CO_2^-$, an imide anion, an oxalate complex anion, and the like. Examples of the imide anion include $N(SO_2CF_3)_2^-$, and $N(C_mF_{2m+1}SO_2)_x$ $(C_nF_{2n+1}SO_2)_y^-$, where m and n each independently represent an integer of 0, 1 or more, x and y each independently represent 0, 1, or 2, and x and y satisfy x + y = 2. The oxalate complex anion may contain boron and/or phosphorus. Examples of the oxalate complex anion include a bis(oxalate)borate anion, $BF_2(C_2O_4)^-$, $PF_4(C_2O_4)^-$, and $PF_2(C_2O_4)_2^-$. The nonaqueous electrolyte may contain one or two or more types of these anions.

From the viewpoint of suppressing the deposition of the lithium metal to form dendrites, the nonaqueous electrolyte preferably contains an oxalate complex anion. Due to interaction of the oxalate complex anion with lithium, a lithium metal is likely to deposit uniformly in the form of fine particles. For this reason, local deposition of the lithium metal can be easily suppressed. The oxalate complex anion may be combined with a different type of anion. The different type of anion may be $PF_6^-$ and/or an imide anion.

The nonaqueous electrolyte may contain, as a solute (a lithium salt), $LiBF_2(C_2O_4)$ (lithium difluoro(oxalate) borate).

As the nonaqueous solvent, for example, an ester, an ether, a nitril, an amide, or a halogenated form thereof may be used. The nonaqueous electrolyte may contain one of these nonaqueous solvents, or two or more of these nonaqueous solvents. The halogenated form may be a fluoride or the like.

Examples of the ester include a carbonic ester, and a carboxylic ester. Example of a cyclic carbonic ester include ethylene carbonate, propylene carbonate, and fluoroethylene carbonate (FEC). Examples of a linear carbonic ester include dimethyl carbonate (DMC), ethyl methyl carbonate (EMC), and diethyl carbonate. Examples of a cyclic carboxylic ester include γ-butyrolactone, and γ-valerolactone. Examples of a linear carboxylic ester include ethyl acetate, methyl propionate, and methyl fluoropropionate.

The ether includes a cyclic ether and a linear ether. Examples of the cyclic ether include 1,3-dioxolane, 4-methyl-1,3-dioxolane, tetrahydrofuran, and 2-methyltetrahydrofuran. Examples of the linear ether include 1,2-dimethoxy ethane, diethyl ether, ethyl vinyl ether, methyl phenyl ether, benzyl ethyl ether, diphenyl ether, dibenzyl ether, 1,2-diethoxy ethane, and diethylene glycol dimethyl ether.

The concentration of the lithium salt in the nonaqueous electrolyte is, for example, 0.5 mol/L or more and 3.5 mol/L or less. The concentration of the anion in the nonaqueous electrolyte may be 0.5 mol/L or more and 3.5 mol/L or less. Also, the concentration of the oxalate complex anion in the nonaqueous electrolyte may be 0.05 mol/L or more and 1 mol/L or less.

The nonaqueous electrolyte may contain an additive. As the additive, an additive that forms a coating film on the negative electrode may be used. As a result of a coating film derived from the additive being formed on the negative electrode, the formation of dendrites is likely to be suppressed. Examples of the additive include vinylene carbonate, FEC, and vinyl ethyl carbonate (VEC).

(Others)

The secondary battery (B) usually includes an outer casing that houses the electrode group and the nonaqueous electrolyte. There is no particular limitation on the outer casing, and a known outer casing can be used.

Hereinafter, one example of the nonaqueous electrolyte secondary battery (B) of the present embodiment will be specifically described with reference to the drawings. As the constituent elements of the one example of the secondary battery described below, the constituent elements described above can be used. Also, the constituent elements of the one example of the secondary battery described below can be changed based on the foregoing description. Also, the matters described in the following description may also be applied to the embodiment described above. Also, in the secondary battery described below, the constituent elements that are not essential to the secondary battery of the present disclosure may be omitted. In the diagrams which will be referred to in the following description, for the sake of facilitating the understanding, the scale of the constituent elements is changed.

(Embodiment 1)

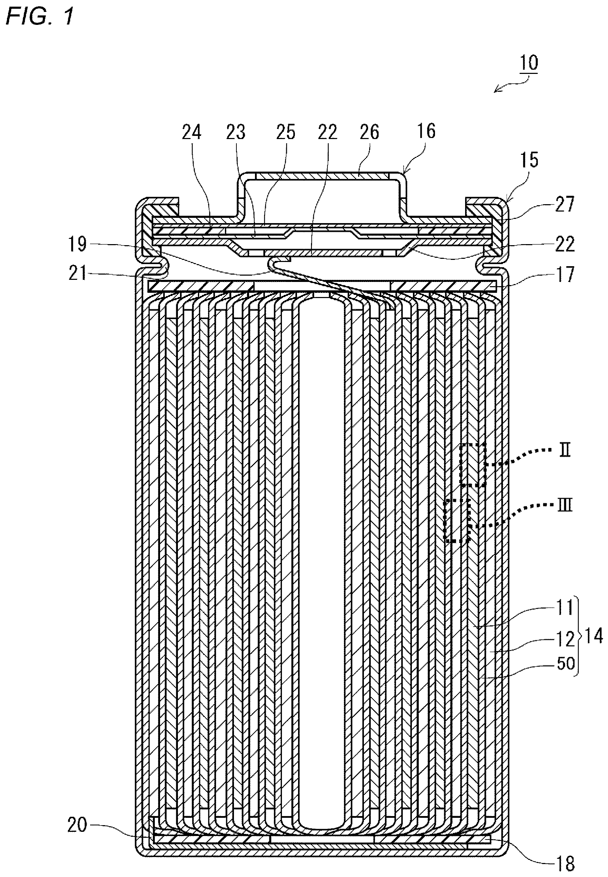

In Embodiment 1, as one example of the nonaqueous electrolyte secondary battery (B), a lithium secondary battery will be described. In this example, an example will be described in which the spacer is formed on the separator. FIG. 1 is a vertical cross-sectional view schematically showing a nonaqueous electrolyte secondary battery 10 according to Embodiment 1. In FIG. 1, an illustration of the spacer and the space formed by the spacer is omitted.

The cylindrical secondary battery (nonaqueous electrolyte secondary battery) 10 shown in FIG. 1 includes a cylindrical battery case, and a spirally-wound type electrode group 14 and a nonaqueous electrolyte (not shown) that are housed in the battery case. The battery case includes a case main body 15 that is a bottomed cylindrical metal container and a sealing member 16 that seals an opening of the case main body 15. A gasket 27 is provided between the case main body 15 and the sealing member 16. Due to the gasket 27, the air-tightness of the battery case is ensured. In the case main body 15, insulating plates 17 and 18 are respectively provided on opposite ends of the electrode group 14 in the winding axis direction of the electrode group 14.

The case main body 15 includes a narrow portion 21 formed by, for example, partially pressing the side wall of the case main body 15 from outside. The narrow portion 21 may be formed in an annular shape along the circumferential direction of the case main body 15 in the side wall of the case main body 15. In this case, the sealing member 16 is supported on a surface of the narrow portion 21 on the opening side.

The sealing member 16 includes a filter 22, a lower valve 23, an insulating member 24, an upper valve 25, and a cap 26. In the sealing member 16, these members are stacked in this order. The above-described members that constitute the sealing member 16 have, for example, a disc or ring shape. The lower valve 23 and the upper valve 25 are connected to each other at their center portions, with the insulating member 24 interposed between their peripheral edges. The filter 22 and the lower valve 23 are connected to each other at their peripheral edges. The upper valve 25 and the cap 26 are connected to each other at their peripheral edges. That is, the members excluding the insulating member 24 are electrically connected to each other.

Although not shown, the lower valve 23 includes a ventilation hole. Accordingly, if the internal pressure of the battery case increases due to overheating or the like, the upper valve 25 bulges toward the cap 26 and moves apart from the lower valve 23. The electric connection between the lower valve 23 and the upper valve 25 is thereby interrupted. If the internal pressure further increases, the upper valve 25 ruptures, and gas is released from an opening (not shown) formed in the cap 26.

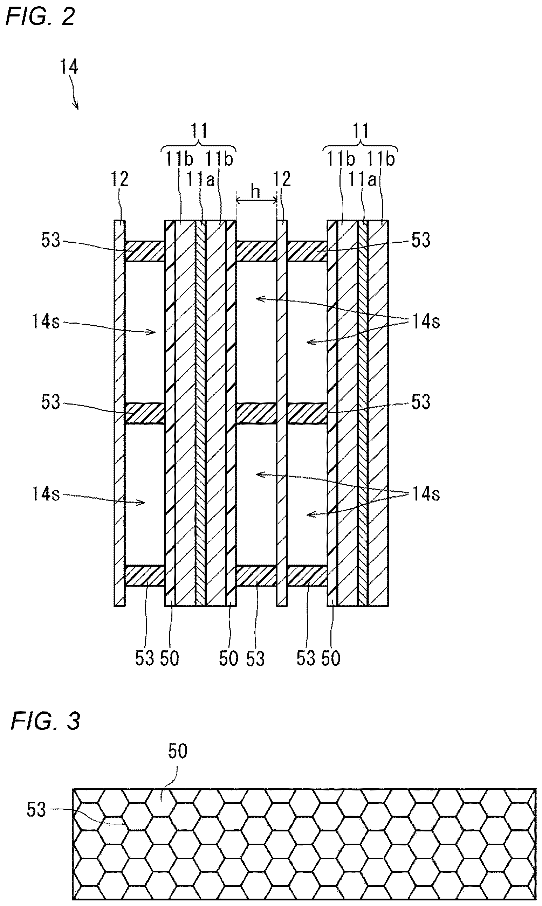

FIG. 2 is an enlarged view of a portion of the electrode group 14. FIG. 2 includes a portion near the positive electrode surrounded by region II shown in FIG. 1 and a portion near the negative electrode surrounded by region III shown in FIG. 1. In FIG. 2, h represents the height of a spacer 53.

The electrode group 14 includes a positive electrode 11, a negative electrode 12, a separator 50, and a spacer 53. The positive electrode 11, the negative electrode 12, and the separator 50 all have a strip shape. The spacer 53 is formed on the separator 50. The positive electrode 11, the negative electrode 12, and the separator 50 are spirally wound, with the separator 50 interposed between the positive electrode 11 and the negative electrode 12. The electrode group 14 is thereby formed. The separator 50 and the spacer 53 formed on the separator 50 correspond to the separator (S) described above. That is, the separator 50 corresponds to the substrate of the separator (S).

The positive electrode 11 includes a positive electrode current collector 11a and a positive electrode material mixture layer 11b. The positive electrode current collector 11a is electrically connected to the cap 26, which functions as a positive electrode terminal, via a positive electrode lead 19. In FIG. 2, as the negative electrode 12, a negative electrode (negative electrode current collector) without deposition of a lithium metal is shown. The negative electrode 12 is electrically connected to the case main body 15, which functions as a negative electrode terminal, via a negative electrode lead 20.

In one example shown in FIG. 2, the spacer 53 is formed on one of two main surfaces of the separator 50 that is on the negative electrode 12 side, but may be formed on the main surface of the separator 50 that is on the positive electrode 11 side. Due to the spacer 53, a space 14s is formed between the positive electrode 11 and the negative electrode 12.

In the secondary battery 10, a lithium metal deposits on the negative electrode 12 during charging. Because the space 14s is formed between the positive electrode 11 and the negative electrode 12, the change in the volume of the electrode group 14 caused by deposition of the lithium metal is reduced, and thus the cycle characteristics are improved.

One example of a planar shape of the spacer 53 is shown in FIG. 3. The spacer 53 shown in FIG. 3 includes linear protrusions. The linear protrusions shown in FIG. 3 are arranged in a mesh pattern. More specifically, the linear protrusions are formed in a honeycomb pattern. The honeycomb pattern is a pattern in which a plurality of hexagons are arranged to share common sides.

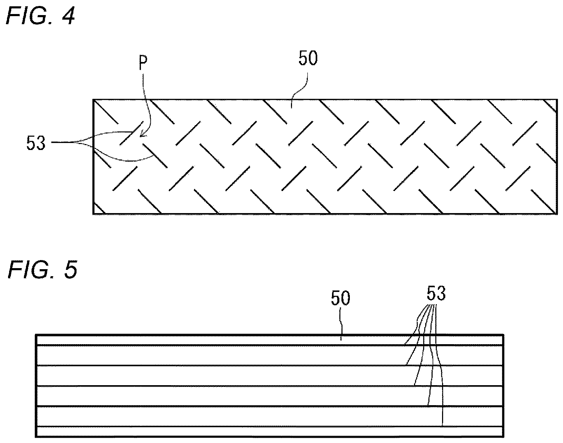

Another example of the planar shape of the spacer 53 is shown in FIG. 4. The spacer 53 shown in FIG. 4 includes a plurality of linear protrusions that are spaced apart from each other. Intervals P are formed between the linear protrusions. Another example of the planar shape of the spacer 53 is shown in FIG. 5. The spacer 53 shown in FIG. 5 includes a plurality of linear protrusions that are arranged in a stripe pattern. In the examples shown in FIGS. 3 to 5, regions where the linear protrusions are not formed constitute spaces 14s shown in FIG. 2.

(Additional Statement)

The following techniques are disclosed based on the foregoing description.

(Technique 1)

A nonaqueous electrolyte secondary battery including:

a positive electrode;
a negative electrode;
a separator provided between the positive electrode and the negative electrode;
a nonaqueous electrolyte; and
a spacer provided in at least one region selected from the group consisting of a region between the positive electrode and the separator and a region between the negative electrode and the separator,
wherein the negative electrode is a negative electrode in which a metal used as a negative electrode active material deposits during charging, and the metal dissolves during discharging,
the spacer contains a resin and a filler, and
the resin contains a cellulose-based compound.

(Technique 2)

The nonaqueous electrolyte secondary battery according to technique 1,
wherein the cellulose-based compound content in the resin is 50 volume% or more.

(Technique 3)

The nonaqueous electrolyte secondary battery according to technique 1 or 2,
wherein the resin is the cellulose-based compound.

(Technique 4)

The nonaqueous electrolyte secondary battery according to any one of techniques 1 to 3, wherein the cellulose-based compound contains at least one selected from the group consisting of methyl cellulose, ethyl cellulose, and carboxymethyl cellulose.

(Technique 5)

The nonaqueous electrolyte secondary battery according to any one of techniques 1 to 4, wherein the resin content in the spacer is 30 volume% or more.

(Technique 6)

The nonaqueous electrolyte secondary battery according to any one of techniques 1 to 5, wherein the spacer is formed on the separator.

(Technique 7)

The nonaqueous electrolyte secondary battery according to any one of techniques 1 to 6, wherein the spacer includes at least one selected from the group consisting of linear protrusions and dot-shaped protrusions.

(Technique 8)

A separator for a nonaqueous electrolyte secondary battery including:

a substrate; and
a spacer formed on the substrate,
wherein the spacer contains a resin and a filler, and
the resin contains a cellulose-based compound.

(Technique 9)

The separator according to technique 8,
wherein the cellulose-based compound content in the resin is 50 volume% or more.

(Technique 10)

The separator according to technique 8 or 9,
wherein the resin is the cellulose-based compound.

(Technique 11)

The separator according to any one of techniques 8 to 10, wherein the cellulose-based compound contains at least one selected from the group consisting of methyl cellulose, ethyl cellulose, and carboxymethyl cellulose.

(Technique 12)

The separator according to any one of techniques 8 to 11, wherein the resin content in the spacer is 30 volume% or more.

(Technique 13)

The separator according to any one of techniques 8 to 12, wherein the spacer includes at least one selected from the group consisting of linear protrusions and dot-shaped protrusions.

[Examples]

Hereinafter, the secondary battery (B) according to the present embodiment will be specifically described based on examples. In the examples given below, a plurality of lithium secondary batteries with different spacers were produced and evaluated.

(Battery A1)

A lithium secondary battery A1 was produced in the following procedure.

(1) Production of Positive Electrode

A lithium-containing transition metal oxide with a layered rock salt structure (NCA: a positive electrode active material) containing Li, Ni, Co and Al (with the molar ratio of Li being 1.0 relative to the total amount of Ni, Co, and Al) was prepared. The lithium-containing transition metal oxide (NCA) was mixed with acetylene black (AB: a conductive material) and polyvinylidene fluoride (PVdF: a binder) at a mass ratio of NCA:AB:PVdF = 95:2.5:2.5. Furthermore, an appropriate amount of N-methyl-2-pyrrolidone (NMP) was added thereto, and the mixture was stirred to prepare a positive electrode material mixture slurry. Next, the obtained positive electrode material mixture slurry was applied to both sides of a strip-shaped Al foil (a positive electrode current collector), and then dried. In this way, a stacked body including the positive electrode current collector and the positive electrode material mixture applied to the positive electrode current collector was formed. Next, the stacked body was rolled using a roller. The rolled stacked body was finally cut into a predetermined size. In this way, a positive electrode including the positive electrode current collector and positive electrode material mixture layers formed on both sides of the positive electrode current collector was produced.

(2) Preparation of Negative Electrode

As a negative electrode, a strip-shaped copper foil (with a thickness of 12 $\mu$m) including rolled lithium metal layers (each with a thickness of 25 $\mu$m) formed on both sides of the strip-shaped copper foil was used.

(3) Production of Separator and Spacer

First, a strip-shaped polyethylene porous film (with an average thickness of 10 $\mu$m) was prepared as a substrate layer. Next, a porous composite material layer (with an average thickness of 2 $\mu$m) was formed on one side of the substrate layer. The composite material layer was formed by forming, on the substrate layer, a second layer and a first layer in this order.

The second layer was formed in the following manner. First, N-methyl-2-pyrrolidone (NMP) and calcium chloride were mixed at a mass ratio of 94.2:5.8. The obtained mixture was heated to about 80°C to completely dissolve calcium chloride. Then, the resulting solution was brought back to room temperature. 2200 g of the solution was taken, and 0.6 mol of paraphenylenediamine (PPD) was added and completely dissolved in the solution. Then, 0.6 mol of terephthalic acid dichloride (TPC) was added in portions to the solution with its temperature being kept at about 20°C. The obtained solution was aged at about 20°C for one hour to obtain a polymerized liquid. Next, 100 g of the polymerized liquid was mixed with a N-methyl-2-pyrrolidone solution in which 5.8 mass% calcium chloride was dissolved to obtain a solution (a coating liquid) containing paraphenylene terephthalamide (PPTA), which is an aromatic polyamide (aramid), at a concentration of 2 mass%.

Next, the obtained coating liquid was applied onto the substrate layer using a slot die method to form a coating film. Next, the substrate layer on which the coating film was formed was left in an atmosphere at a temperature of 25°C and a relative humidity of 70% for one hour to cause the aromatic polyamide to deposit. Next, the substrate layer was washed with water to remove the NMP and calcium chloride contained in the coating film. Next, the coating film was dried at 60°C for 5 minutes to form a second layer.

The first layer was formed in the following manner. First, lithium phosphate ($Li_3PO_4$) particles and poly(N-vinylacetamide) (PNVA) were mixed at a mass ratio of 100:8 to obtain a mixture. As the lithium phosphate particles, lithium phosphate particles with a volume-based median particle size of 0.19 $\mu$m were used. Water (ion exchange water) was added to the obtained mixture and stirred to prepare a slurry (a coating liquid) with a solid content concentration of 12 mass%. Next, the obtained slurry was applied onto the second layer through micro-gravure coating to form a coating film. Next, the coating film was dried in a drying furnace attached to the coating machine. In this way, a first layer was formed. Through the above-described processing, a composite material layer was formed.

Next, a coating liquid containing ethyl cellulose and alumina particles (an inorganic filler) was prepared. Ethyl cellulose and alumina particles were added to the coating liquid at a volume ratio of ethyl cellulose and alumina particles = 40:60. N-methyl-2-pyrrolidone was used as a liquid medium (a dispersion medium) for the coating liquid. Next, the coating liquid was applied in a pattern (a honeycomb pattern) as shown in FIG. 3 onto the composite material layer using a dispenser. After that, the coating liquid applied on the composite material layer was vacuum-dried. In this way, a spacer in a pattern as shown in FIG. 3 was formed.

(4) Preparation of Nonaqueous Electrolyte

Ethylene carbonate (EC) and dimethyl carbonate (DMC) were mixed at a volume ratio of EC and DMC = 30:70. $LiPF_6$ and $LiBF_2(C_2O_4)$ were dissolved in the obtained mixed solvent at a $LiPF_6$ concentration of 1 mol/L and $LiBF_2(C_2O_4)$ concentration of 0.1 mol/L to prepare a liquid nonaqueous electrolyte.

(5) Production of Battery

An aluminum tab was attached to the positive electrode obtained in the above-described manner. A nickel tab was attached to the negative electrode obtained in the above-described manner. The positive electrode and the negative electrode were spirally wound with the separator interposed therebetween in an inert gas atmosphere to produce a spirally wound-type electrode group. At this time, the separator was placed such that the spacer was in contact with the negative electrode. In this way, a battery A1 was produced.

(Batteries A2, A3, and C1 to C3)

Batteries A2, A3 and C1 to C3 were produced under the same condition and using the same method as those used to produce the battery A1, except that the resin contained in the spacer was changed from ethyl cellulose to those shown in Table 1.

Each of the batteries produced in the above-described manner was subjected to a charging/discharging test. In the charging/discharging test, in a thermostatic chamber set at 45°C, each battery was charged under the following charging condition. After 20 minutes of resting, the battery was then discharged under the following discharging condition.

(Charging)

The battery was subjected to constant current charging at a current value of 2.15 mA per electrode unit area (in the unit of square centimeter) until the battery voltage reached 4.1 V, and thereafter subjected to constant voltage charging at a voltage of 4.1 V until the current value per electrode unit area reached 0.54 mA.

(Discharging)

The battery was subjected to constant current discharging at a current value of 2.15 mA per electrode unit area until the battery voltage reached 3.75 V.

(Capacity Retention Rate)

In the charging/discharging test described above, discharge capacity C (1) at the first cycle and discharge capacity C (200) at the 200th cycle were measured. Then, capacity retention rate was determined from the following equation.

$$\text{Capacity retention rate (\%)} = 100 \times C\,(200)\,/\,C\,(1)$$

Also, initial efficiency was determined for each of the produced batteries. As used herein, the term "initial efficiency" refers to the ratio of the discharge capacity at the first cycle relative to the charge capacity at the first cycle. A portion of battery production condition and evaluation results are shown in Table 1. In addition, the glass transition point Tg of the resin used to form the spacer and the compression strength of the resin itself are also shown in Table 1.

[Table 1]

| Battery | Resin | | | Evaluation result | |
|---|---|---|---|---|---|
| | Type | Tg (°C) | Compression strength (N/mm$^2$) | Initial efficiency (%) | Capacity retention rate (%) |
| A1 | Ethyl cellulose | 130 | 222 | 91.4 | 87 |
| A2 | Methyl cellulose | 290 | 212 | 91.4 | 87 |
| A3 | Carboxymethyl cellulose | 290 | 199 | 91.3 | 87 |
| C1 | Polyvinylidene fluoride | 151 | 66 | 91.3 | 85 |
| C2 | Polyimide | 200 | 238 | 90.2 | 87 |
| C3 | Polyacrylic acid | 80 | 77 | 91.4 | 84 |

The batteries A1 to A3 correspond to secondary batteries (B) according to the present disclosure, and the batteries C1 to C3 correspond to batteries according to the comparative examples. The batteries A1 to A3 exhibited high values in terms of both initial efficiency and capacity retention rate. That is, the initial characteristics and the cycle characteristics of the batteries A1 to A3 were high. The battery C1 exhibited a low value in terms of capacity retention rate. The reason is considered to be that the resin had a low compression strength. The battery C2 exhibited a low value in terms of initial efficiency. The reason is considered to be that the polyamic acid contained in the polyimide reacted with lithium. The battery C3 exhibited a low value in terms of capacity retention rate. The reason is considered to be that the polyacrylic acid had a low glass transition point and a low compression strength. On the other hand, the cellulose-based compound has a high glass transition point Tg and a high compression strength. Also, it is considered that, unlike polyimides, the cellulose-based compound is unlikely to cause an unwanted side reaction. For this reason, it is considered that the batteries A1 to A3 exhibited high values in terms of initial efficiency and cycle characteristics.

[Industrial Applicability]

The present disclosure is applicable to a nonaqueous electrolyte secondary battery.

The present invention has been described in terms of the presently preferred embodiments, but the disclosure should not be interpreted as limiting. Various alterations and modifications will no doubt become apparent to those skilled in the art to which the present invention pertains, after having read the disclosure. Accordingly, it is to be understood that the appended claims be interpreted as covering all alterations and modifications which fall within the true spirit and scope of the present invention.

[Reference Signs List]

10: secondary battery (nonaqueous electrolyte secondary battery), 11: positive electrode, 12: negative electrode, 14s: space, 50: separator, 53: spacer

**Claims**

1.  A nonaqueous electrolyte secondary battery comprising:

    a positive electrode;
    a negative electrode;
    a separator provided between the positive electrode and the negative electrode;
    a nonaqueous electrolyte; and
    a spacer provided in at least one region selected from the group consisting of a region between the positive electrode and the separator and a region between the negative electrode and the separator,
    wherein the negative electrode is a negative electrode in which a metal used as a negative electrode active material deposits during charging, and the metal dissolves during discharging,
    the spacer contains a resin and a filler, and
    the resin contains a cellulose-based compound.

2.  The nonaqueous electrolyte secondary battery according to claim 1,
    wherein the cellulose-based compound content in the resin is 50 volume% or more.

3.  The nonaqueous electrolyte secondary battery according to claim 1 or 2,
    wherein the resin is the cellulose-based compound.

4.  The nonaqueous electrolyte secondary battery according to claim 1 or 2,
    wherein the cellulose-based compound contains at least one selected from the group consisting of methyl cellulose, ethyl cellulose, and carboxymethyl cellulose.

5.  The nonaqueous electrolyte secondary battery according to claim 1 or 2,
    wherein the resin content in the spacer is 30 volume% or more.

6.  The nonaqueous electrolyte secondary battery according to claim 1 or 2,
    wherein the spacer is formed on the separator.

7.  The nonaqueous electrolyte secondary battery according to claim 1 or 2,
    wherein the spacer includes at least one selected from the group consisting of linear protrusions and dot-shaped protrusions.

8.  A separator for a nonaqueous electrolyte secondary battery comprising:

    a substrate; and
    a spacer formed on the substrate,

wherein the spacer contains a resin and a filler, and
the resin contains a cellulose-based compound.

9. The separator according to claim 8,
wherein the cellulose-based compound content in the resin is 50 volume% or more.

10. The separator according to claim 8 or 9,
wherein the resin is the cellulose-based compound.

11. The separator according to claim 8 or 9,
wherein the cellulose-based compound contains at least one selected from the group consisting of methyl cellulose, ethyl cellulose, and carboxymethyl cellulose.

12. The separator according to claim 8 or 9,
wherein the resin content in the spacer is 30 volume% or more.

13. The separator according to claim 8 or 9,
wherein the spacer includes at least one selected from the group consisting of linear protrusions and dot-shaped protrusions.

*FIG. 1*

*FIG. 2*

*FIG. 3*

*FIG. 4*

*FIG. 5*

## INTERNATIONAL SEARCH REPORT

| International application No. |
|---|
| **PCT/JP2024/001088** |

| A. | CLASSIFICATION OF SUBJECT MATTER |
|---|---|

*H01M 10/058*(2010.01)i; *H01M 4/134*(2010.01)i; *H01M 10/052*(2010.01)i; *H01M 10/054*(2010.01)i;
*H01M 50/463*(2021.01)i; *H01M 50/474*(2021.01)i; *H01M 50/477*(2021.01)i; *H01M 50/483*(2021.01)i;
*H01M 50/486*(2021.01)i
FI: H01M10/058; H01M4/134; H01M10/052; H01M10/054; H01M50/463 B; H01M50/474; H01M50/477; H01M50/483; H01M50/486

According to International Patent Classification (IPC) or to both national classification and IPC

| B. | FIELDS SEARCHED |
|---|---|

Minimum documentation searched (classification system followed by classification symbols)

H01M10/058; H01M4/134; H01M10/052; H01M10/054; H01M50/463; H01M50/474; H01M50/477; H01M50/483; H01M50/486

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

| C. | DOCUMENTS CONSIDERED TO BE RELEVANT |
|---|---|

| Category* | Citation of document, with indication, where appropriate, of the relevant passages | Relevant to claim No. |
|---|---|---|
| X | WO 2015/156411 A1 (SUMITOMO CHEMICAL COMPANY, LIMITED) 15 October 2015 (2015-10-15) example 1 | 8-11 |
| A | | 1-7, 12-13 |
| X | WO 2013/015228 A1 (SUMITOMO CHEMICAL COMPANY, LIMITED) 31 January 2013 (2013-01-31) example 1 | 8-11 |
| A | | 1-7, 12-13 |

☑ Further documents are listed in the continuation of Box C.      ☑ See patent family annex.

| | |
|---|---|
| \* Special categories of cited documents: | "T" later document published after the international filing date or priority date and not in conflict with the application but cited to understand the principle or theory underlying the invention |
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **04 March 2024** | **12 March 2024** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (July 2022)

**INTERNATIONAL SEARCH REPORT**

| International application No. |
| --- |
| **PCT/JP2024/001088** |

**C.     DOCUMENTS CONSIDERED TO BE RELEVANT**

| Category* | Citation of document, with indication, where appropriate, of the relevant passages | Relevant to claim No. |
| --- | --- | --- |
| X | JP 2018-130966 A (SUMITOMO CHEMICAL COMPANY, LIMITED) 23 August 2018 (2018-08-23) examples | 8-11 |
| A | | 1-7, 12-13 |
| X | JP 2013-22876 A (SUMITOMO CHEMICAL COMPANY, LIMITED) 04 February 2013 (2013-02-04) example 1 | 8-11 |
| A | | 1-7, 12-13 |

Form PCT/ISA/210 (second sheet) (July 2022)

## INTERNATIONAL SEARCH REPORT
### Information on patent family members

International application No.

**PCT/JP2024/001088**

| Patent document cited in search report | | | Publication date (day/month/year) | Patent family member(s) | | | Publication date (day/month/year) |
|---|---|---|---|---|---|---|---|
| WO | 2015/156411 | A1 | 15 October 2015 | US example 1 CN KR | 2017/0149040 106163791 10-2016-0144369 | A1 A A | |
| WO | 2013/015228 | A1 | 31 January 2013 | (Family: none) | | | |
| JP | 2018-130966 | A | 23 August 2018 | US examples CN KR | 2017/0117525 106163807 10-2016-0144403 | A1 A A | |
| JP | 2013-22876 | A | 04 February 2013 | (Family: none) | | | |

Form PCT/ISA/210 (patent family annex) (July 2022)

**EP 4 661 141 A1**

**REFERENCES CITED IN THE DESCRIPTION**

**Patent documents cited in the description**

- WO 2020066254 A
- JP 7017869 B